# EUROPÄISCHE PATENTSCHRIFT

(11) **EP 4 408 647 B1**
(45) Veröffentlichungstag und Bekanntmachung des Hinweises auf die Patenterteilung: **16.07.2025**
(21) Anmeldenummer: 22797681.8
(22) Anmeldetag: 26.09.2022
(51) Int. Cl.: B29C 65/08, B29C 65/18, B29C 65/30, B29C 65/78, B65B 9/20, B65B 51/26

(54) **SIEGELVORRICHTUNG UND LÄNGSSIEGELEINRICHTUNG MIT EINER SOLCHEN SIEGELVORRICHTUNG**
SEALING DEVICE AND LONGITUDINAL SEALING DEVICE COMPRISING SUCH A SEALING DEVICE
DISPOSITIF DE SCELLEMENT ET DISPOSITIF DE SCELLEMENT LONGITUDINAL POURVU D'UN TEL DISPOSITIF DE SCELLEMENT

(30) Priorität: 28.09.2021 DE 102021125155
(43) Veröffentlichungstag der Anmeldung: 07.08.2024
(73) Patentinhaber: Syntegon Technology GmbH, 71332 Waiblingen (DE)
(72) Erfinder: GREIF, Tobias, 71522 Backnang (DE); KARCHER, Rüdiger, 73547 Lorch (DE); BISCHOFF, Bernd Konrad, 71332 Waiblingen (DE)
(74) Vertreter: Novagraaf Group
(86) Internationale Anmeldenummer: PCT/EP2022/076700
(87) Internationale Veröffentlichungsnummer: WO 2023/052301

(56) Entgegenhaltungen:
- US-A- 4 676 051

## Beschreibung

### Stand der Technik

Aus EP 1 167 192 A2 und DE 603 07 129 T2 sind bereits Siegelvorrichtungen für eine Längssiegeleinrichtung einer Verpackungsmaschine bekannt, wobei die bekannten Siegelvorrichtungen zumindest einen Siegelhalter zum Fixieren einer Siegelbacke der Längssiegeleinrichtung, zumindest einen weiteren Siegelhalter zum Fixieren einer weiteren Siegelbacke der Längssiegeleinrichtung, wobei der Siegelhalter und der weitere Siegelhalter relativ zueinander beweglich gelagert sind, und eine mechanische Kopplungseinheit umfassen, an welcher der Siegelhalter und der weitere Siegelhalter angeordnet sind, wobei die Kopplungseinheit zumindest ein Kraftübertragungselement und ein weiteres Kraftübertragungselement umfasst, wobei das Kraftübertragungselement bei einem Siegeln zu einer Übertragung einer bereitgestellten Siegelkraft auf den Siegelhalter in Form einer Druckkraft vorgesehen ist und wobei das weitere Kraftübertragungselement bei einem Siegeln zu einem Übertragen der bereitgestellten Siegelkraft auf den weiteren Siegelhalter in Form einer Zugkraft vorgesehen ist.

Ferner ist aus US 4 676 051 A bereits eine Siegelvorrichtung für eine Längssiegeleinrichtung einer Verpackungsmaschine bekannt, wobei die bereits bekannte Siegelvorrichtung zumindest einen Siegelhalter zum Fixieren einer Siegelbacke der Längssiegeleinrichtung, zumindest einen weiteren Siegelhalter zum Fixieren einer weiteren Siegelbacke der Längssiegeleinrichtung, wobei der Siegelhalter und der weitere Siegelhalter relativ zueinander beweglich gelagert sind, und eine mechanische Kopplungseinheit umfasst, an welcher der Siegelhalter und der weitere Siegelhalter angeordnet sind, wobei die Kopplungseinheit zumindest ein Kraftübertragungselement und ein weiteres Kraftübertragungselement umfasst, wobei das Kraftübertragungselement bei einem Siegeln zu einer Übertragung einer bereitgestellten Siegelkraft auf den Siegelhalter in Form einer Druckkraft vorgesehen ist und wobei das weitere Kraftübertragungselement bei einem Siegeln zu einem Übertragen der bereitgestellten Siegelkraft auf den weiteren Siegelhalter in Form einer Zugkraft vorgesehen ist.

### Offenbarung der Erfindung

Die Erfindung geht aus von einer Siegelvorrichtung für eine Längssiegeleinrichtung einer Verpackungsmaschine, mit zumindest einem Siegelhalter zum Fixieren einer Siegelbacke der Längssiegeleinrichtung, mit zumindest einem weiteren Siegelhalter zum Fixieren einer weiteren Siegelbacke der Längssiegeleinrichtung, wobei der Siegelhalter und der weitere Siegelhalter relativ zueinander beweglich gelagert sind, und mit einer mechanischen Kopplungseinheit, an welcher der Siegelhalter und der weitere Siegelhalter angeordnet sind, wobei die Kopplungseinheit zumindest ein Kraftübertragungselement und ein weiteres Kraftübertragungselement umfasst, wobei das Kraftübertragungselement bei einem Siegeln zu einer Übertragung einer bereitgestellten Siegelkraft auf den Siegelhalter in Form einer Druckkraft vorgesehen ist und wobei das weitere Kraftübertragungselement bei einem Siegeln zu einem Übertragen der bereitgestellten Siegelkraft auf den weiteren Siegelhalter in Form einer Zugkraft vorgesehen ist.

Es wird vorgeschlagen, dass die Kopplungseinheit zumindest eine, insbesondere pneumatische, Kolbeneinheit mit zumindest einer Kolbenkammer und mit einem in der Kolbenkammer gelagerten Kolben umfasst, wobei der Kolben mit einem der Kraftübertragungselemente wirkverbunden ist und die Kolbenkammer mit einem anderen der Kraftübertragungselemente als der Kolben wirkverbunden ist. Bei dem Siegeln wird insbesondere ein Verpackungsmaterial durch Anpressen zumindest einer der Siegelbacken an das Verpackungsmaterial mit der Siegelkraft gesiegelt. Die Siegelbacke ist zumindest während des Siegelns insbesondere starr mit dem Siegelhalter verbunden, insbesondere daran fixiert. Vorzugsweise ist die weitere Siegelbacke zumindest während des Siegelns starr mit dem weiteren Siegelhalter verbunden, insbesondere daran fixiert. Insbesondere wird die Siegelbacke von der Kopplungseinheit während des Siegelns vermittelt über den Siegelhalter mit der Druckkraft gegen das Verpackungsmaterial gedrückt. Insbesondere wird die weitere Siegelbacke von der Kopplungseinheit während des Siegelns vermittelt über den weiteren Siegelhalter mit der Zugkraft gegen das Verpackungsmaterial gezogen. Bevorzugt ist die Siegelbacke zur Erzeugung einer Längsnaht an dem Verpackungsmaterial vorgesehen. Bevorzugt ist die weitere Siegelbacke zur Erzeugung einer weiteren Längsnaht an dem Verpackungsmaterial vorgesehen. Die Längsnaht und die weitere Längsnaht können als Kantennaht, welche insbesondere aus zwei benachbarten Bereichen des Verpackungsmaterials eine Kante einer Verpackung bildet, oder als Verschlussnaht, welche insbesondere zwei voneinander abgewandte Enden des Verpackungsmaterials oder zwei Bahnen des Verpackungsmaterials miteinander verbindet, ausgebildet sein. Die Längsnaht und die weitere Längsnaht werden vorzugsweise beabstandet voneinander hergestellt. Insbesondere sind die Siegelbacke und die weitere Siegelbacke während des Siegelns beabstandet voneinander angeordnet. Alternativ werden die Siegelbacke und die weitere Siegelbacke beim Siegeln gegeneinander gepresst, um eine einzelne Längsnaht zu erzeugen. Die Siegelbacke und die weitere Siegelbacke sind vorzugsweise elektrisch aufheizbar ausgebildet, um die Längsnähte zu erzeugen. Alternativ sind die Siegelbacke und die weitere Siegelbacke zu einem Erstellen der Längsnähte mittels Ultraschallschweißen ausgebildet. Die Siegelbacken sind vorzugsweise an den Siegelhaltern verschraubt oder anderweitig fixiert. Insbesondere sind die Siegelbacken, beispielsweise abhängig von der zu erstellenden Längsnaht und/oder der Art des Verpackungsmaterials, austauschbar.

Das Verpackungsmaterial ist vorzugsweise folienförmig ausgebildet und kann insbesondere einschichtig oder mehrschichtig aufgebaut sein. Das Verpackungsmaterial und/oder zumindest eine Schicht des Verpackungsmaterials kann aus Papier, einem Kunststoff, insbesondere Polypropylen, Polyester und/oder Polyethylene, einem Textil und/oder einem Metall gefertigt sein. Insbesondere ist das Verpackungsmaterial ein Verbundstoff. Die Verpackungsmaschine ist insbesondere dazu vorgesehen, aus dem Verpackungsmaterial einen Behälter, insbesondere einen Schlauchbeutel und/oder einen Standbodenbeutel, zu formen, mit einem Packgut zu befüllen und zu verschließen. Vorzugsweise umfasst die Verpackungsmaschine zumindest ein Füllrohr oder einen Füllschacht zu einem Befüllen der aus dem Verpackungsmaterial geformten Behälter. Das Füllrohr oder der Füllschacht weist vorzugsweise eine Befüllungslängsachse auf, welche dazu vorgesehen ist, zu einem Betrieb der Verpackungsmaschine an der Vertikalen ausgerichtet zu werden und entlang derer ein Packgut bei einem Betrieb der Verpackungsmaschine in den geformten Behälter transportiert wird. Die Verpackungsmaschine umfasst insbesondere eine Verpackungsmaterialführung, welche dazu vorgesehen ist, das Verpackungsmaterial, bevorzugt eine einzelne Bahn des Verpackungsmaterials, schlauchförmig um das Füllrohr oder den Füllschacht herum zu formen. Die Längssiegeleinrichtung ist insbesondere dazu vorgesehen, durch das Siegeln eine den Füllschacht umgreifende Form des Verpackungsmaterials zu fixieren. Insbesondere ist die Längssiegeleinrichtung dazu vorgesehen, die Längsnähte zumindest im Wesentlichen parallel zu der Befüllungslängsachse zu erstellen. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Die Siegelvorrichtung umfasst insbesondere ein Maschinengestell, das insbesondere dazu vorgesehen ist, während eines Betriebs der Längssiegeleinrichtung relativ zu dem Füllrohr oder dem Füllschacht unbeweglich zu sein. Die Kopplungseinheit ist vorzugsweise an dem Maschinengestell relativ zu dem Maschinengestell beweglich gelagert. Die Kopplungseinheit ist insbesondere dazu vorgesehen, die Siegelbacken während des Siegelns gegen das Verpackungsmaterial zu pressen und insbesondere nach dem Siegeln von dem Verpackungsmaterial weg zu bewegen. Die Längssiegeleinrichtung umfasst insbesondere zumindest ein Antriebselement zu einer Bewegung der Kopplungseinheit relativ zu dem Maschinengestell. Bevorzugt ist das Antriebselement ein pneumatisches Antriebselement, alternativ ein hydraulisches Antriebselement oder ein elektrisches Antriebselement. Die Kopplungseinheit ist insbesondere dazu vorgesehen, die von dem Antriebselement bereitgestellte Siegelkraft, auf den Siegelhalter und den weiteren Siegelhalter, besonders bevorzugt gleichmäßig, aufzuteilen. Insbesondere ist der Siegelhalter und der weitere Siegelhalter über die Kopplungseinheit mit demselben Antriebselement verbunden. Optional umfasst die Längssiegeleinrichtung mehrere Antriebselemente, welche die Siegelkraft zusammen bereitstellen, wobei der Siegelhalter und der weitere Siegelhalter über die Kopplungseinheit mit allen zusammenwirkenden Antriebselementen verbunden sind. Insbesondere ist der Siegelhalter Siegelhalters, nur gemeinsam mit dem weiteren Siegelhalter relativ zu dem Maschinengestell beweglich. Vorzugsweise ist de weitere Siegelhalter, insbesondere zumindest über einen vollen Bewegungsspielraum des weiteren Siegelhalters, nur gemeinsam mit dem Siegelhalter relativ zu dem Maschinengestell beweglich. Insbesondere, insbesondere zumindest über einen vollen Bewegungsspielraum des führen der Siegelhalter und der weitere Siegelhalter bei einer Beaufschlagung mit der Siegelkraft eine gekoppelte Bewegung aus.

Das Kraftübertragungselement und/oder das weitere Kraftübertragungselement sind vorzugsweise als Stangen, alternativ als Drahtseile, ausgebildet, an denen der Siegelhalter und/oder der weitere Siegelhalter fixiert sind. Das Kraftübertragungselement ist insbesondere zu einer Verschiebung des Siegelhalters entlang einer Verschieberichtung vorgesehen. Vorzugsweise ist das weitere Kraftübertragungselement zu einer Verschiebung des weiteren Siegelhalters entlang einer weiteren Verschieberichtung vorgesehen. Die Verschieberichtung und die weitere Verschieberichtung verlaufen insbesondere zumindest im Wesentlichen parallel zu derselben Geraden. Die Verschieberichtung und die weitere Verschieberichtung sind aufgrund einer Übertragung der Siegelkraft als Druckkraft und als Zugkraft besonders bevorzugt gegenläufig zueinander ausgerichtet. Insbesondere werden der Siegelhalter und der weitere Siegelhalter zu dem Siegeln entlang einer Geraden aufeinander zubewegt und insbesondere nach dem Siegeln entlang dieser Geraden voneinander wegbewegt. Die Längssiegeleinrichtung umfasst insbesondere eine Transportrichtung, entlang derer das Verpackungsmaterial von einer Verpackungstransporteinheit der Längssiegeleinrichtung und/oder der Verpackungsmaschine durch die Längssiegeleinrichtung hindurch gefördert wird. Die Verschieberichtung und die weitere Verschieberichtung ist vorzugsweise zumindest im Wesentlichen senkrecht zu der Transportrichtung. Die Transportrichtung ist insbesondere zumindest im Wesentlichen parallel zu, insbesondere konzentrisch mit, der Befüllungslängsachse ausgerichtet. Insbesondere umgreift die Siegelvorrichtung das Füllrohr oder den Füllschacht in einer zu der Transportrichtung senkrechten Ebene. Vorzugsweise ist die Verpackungstransporteinheit dazu vorgesehen, das Verpackungsmaterial zwischen dem Füllrohr oder dem Füllschacht und der Siegelvorrichtung hindurch durch die Längssiegeleinrichtung zu transportieren. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Durch die erfindungsgemäße Ausgestaltung der Siegelvorrichtung kann die Siegelkraft vorteilhaft symmetrisch auf die Siegelbacken verteilt werden. Insbesondere kann auf ein getrenntes Ansteuern der Siegelhalter verzichtet werden. Insbesondere kann eine synchrone Bewegung der Siegelhalter vorteilhaft automatisch, insbesondere ohne elektronische Zusatzmaßnahmen, erzielt werden. Insbesondere kann ein Risiko einer asymmetrischen Kraftbeaufschlagung vorteilhaft gering gehalten werden. Insbesondere kann ein Siegelprozess vorteilhaft zuverlässig ausgeführt werden. Insbesondere kann ein Anteil der Siegelkraft, welche nicht zum Siegelprozess beiträgt, vorteilhaft gering gehalten werden.

Die Kolbenkammer ist insbesondere an dem Antriebselement angeschlossen. Das Antriebselement ist insbesondere dazu vorgesehen, die Kolbenkammer relativ zu dem Kolben zu bewegen. Vorzugsweise sind die Kolbenkammer und der Kolben mit zumindest je einem der Kraftübertragungselemente, insbesondere in zumindest einem Betriebszustand der Siegelvorrichtung, starr verbunden. Eine starre Verbindung zwischen zwei Objekten kann beispielsweise durch Verschrauben, durch Vernieten, durch Verrasten, durch Klemmen, durch stoffschlüssiges Verbinden oder durch eine einteilige Ausbildung realisiert sein. Beispielsweise ist der Kolben mit dem Kraftübertragungselement wirkverbunden und die Kolbenkammer mit dem weiteren Kraftübertragungselement. Alternativ ist der Kolben mit dem weiteren Kraftübertragungselement verbunden und die Kolbenkammer ist mit Kraftübertragungselement verbunden. In einer vorteilhaft einfachen Ausgestaltung ist das Kraftübertragungselement und/oder das weitere Kraftübertragungselement unmittelbar an der Kolbeneinheit befestigt. Alternativ umfasst die Siegelvorrichtung zumindest eine Verstelleinheit, mit welcher eine relative Position zwischen der Kolbenkammer und/oder dem Kolben und dem Kraftübertragungselement und/oder dem weiteren Kraftübertragungselement veränderbar ist. Die Verstelleinheit umfasst beispielsweise einen Aktor, einen weiteren Kolben in einer weiteren Kolbenkammer, ein Gewindefahrwerk, eine Teleskopstange, eine Klemmmuffe oder dergleichen, um eine relative Position zwischen der Kolbenkammer und/oder dem Kolben und dem Kraftübertragungselement und/oder dem weiteren Kraftübertragungselement einzustellen. Vorzugsweise verbindet die Verstelleinheit zumindest während des Siegelns die Kolbeneinheit starr mit den Kraftübertragungselementen.

Beispielsweise ist der Kolben, insbesondere in zumindest einem Betriebszustand der Siegelvorrichtung, starr mit dem Kraftübertragungselement verbunden. Das Kraftübertragungselement ist vorzugsweise starr mit dem Siegelhalter verbunden. Insbesondere überträgt das Kraftübertragungselement eine Bewegung des Kolbens relativ zu der Kolbenkammer auf den Siegelhalter. Der Siegelhalter und der Kolben bewegen sich bei einer Kraftbeaufschlagung durch das Antriebselement insbesondere zumindest im Wesentlichen um die gleiche Strecke in dieselbe Richtung, insbesondere um die gleiche Strecke abgesehen von einer Spielpassung, mit welcher der Kolben, das Übertragungselement, die optionale Verstelleinheit und/oder der Siegelhalter aneinander befestigt sind. Beispielsweise ist die Kolbenkammer, insbesondere in zumindest einem Betriebszustand der Siegelvorrichtung, starr mit dem weiteren Kraftübertragungselement verbunden. Das weitere Kraftübertragungselement ist vorzugsweise starr mit dem weiteren Siegelhalter verbunden. Insbesondere überträgt das Kraftübertragungselement eine Bewegung der Kolbenkammer relativ zu dem Kolben auf den weiteren Siegelhalter. Der weitere Siegelhalter und die Kolbenkammer bewegen sich bei einer Kraftbeaufschlagung durch das Antriebselement insbesondere zumindest im Wesentlichen um die gleiche Strecke in dieselbe Richtung, insbesondere um die gleiche Strecke abgesehen von einer Spielpassung, mit welcher die Kolbenkammer, das weitere Kraftübertragungselement, die optionale Verstelleinheit und/oder der weitere Siegelhalter aneinander befestigt sind.

Durch die erfindungsgemäße Ausgestaltung der Siegelvorrichtung kann die Siegelkraft vorteilhaft einfach in zwei entgegengesetzte Kräfte, die beide nutzbar sind, umgewandelt werden.

Weiter wird vorgeschlagen, dass die Siegelvorrichtung zumindest eine weitere Kolbeneinheit mit einem weiteren Kolben umfasst, wobei der weitere Kolben entlang einer mechanischen Wirkkette in Reihen mit dem Kolben angeordnet ist.

Insbesondere umfasst die weitere Kolbeneinheit zumindest eine weitere Kolbenkammer, in welcher der weitere Kolben angeordnet ist. Der weitere Kolben und die weitere Kolbeneinheit sind vorzugsweise mit einem weiteren Antriebselement der Längssiegeleinrichtung verbunden, welche insbesondere separat von dem Antriebselement ausgebildet ist. Das weitere Antriebselement kann insbesondere ein hydraulisches, pneumatisches oder elektrisches Antriebselement sein. Insbesondere kann die Kolbeneinheit unabhängig von der weiteren Kolbeneinheit betätigt werden. Vorzugsweise ist eine Hubrichtung der Kolbeneinheit und eine Hubrichtung der weiteren Kolbeneinheit zumindest im Wesentlichen parallel zueinander, und insbesondere parallel zu der Verschieberichtung und/oder der weiteren Verschieberichtung. Die Kolbeneinheit ist insbesondere zu einer Beaufschlagung der Siegelhalter mit der Siegelkraft vorgesehen. Die weitere Kolbeneinheit ist insbesondere zu einer Bewegung der Siegelhalter vorgesehen, insbesondere um die Siegelhalter zwischen einer Ruheposition und einer Siegelposition hin- und her zu bewegen. Insbesondere ist ein maximaler Hub der weiteren Kolbeneinheit größer als, insbesondere mehr als 50 % größer als, bevorzugt mehr als 100 % größer als, ein maximaler Hub der Kolbeneinheit. Insbesondere sind die Siegelhalter in der Ruheposition weiter entfernt voneinander angeordnet als in der Siegelposition. Beispielsweise sind die Kolbenkammer und die weitere Kolbenkammer starr miteinander verbunden. Beispielsweise ist der Kolben mit der weiteren Kolbenkammer starr verbunden. Beispielsweise ist der weitere Kolben mit der Kolbenkammer starr verbunden. Beispielsweise sind der Kolben und der weitere Kolben starr miteinander verbunden. Besonders bevorzugt umfassen die Kolbeneinheit und die weitere Kolbeneinheit eine gemeinsame Montageplatte, über welche sie miteinander verbunden sind. Die Montageplatte ist vorzugsweise beweglich relativ zu dem Maschinengestell, insbesondere beabstandet von dem Maschinengestell, angeordnet. Vorzugsweise ist die weitere Kolbeneinheit entlang der mechanischen Wirkkette zwischen der Kolbeneinheit und dem weiteren Kraftübertragungselement, alternativ zwischen der Kolbeneinheit und dem Kraftübertragungselement, angeordnet. Insbesondere wird die Siegelkraft durch die weitere Kolbeneinheit hindurch zu einem der Siegelhalter übertragen. Vorzugsweise ist eine Position des weiteren Kolbens in der weiteren Kolbenkammer während des Siegelns fixiert. Durch die erfindungsgemäße Ausgestaltung der Siegelvorrichtung kann vorteilhaft zwischen einer Bewegung der Siegelhalter und einer Beaufschlagung der Siegelhalter mit der Siegelkraft unterschieden werden. Insbesondere kann ein maximaler Hub der Kolbeneinheit vorteilhaft klein gehalten werden. Insbesondere kann die Siegelkraft vorteilhaft schnell durch die Kolbeneinheit bereitgestellt werden. Insbesondere kann ein vorteilhaft großer Durchsatz der Siegelvorrichtung erzielt werden. Ferner können die Siegelbacken vorteilhaft in der Ruheposition aufbewahrt werden. Insbesondere kann eine thermische Belastung, insbesondere eine Beschädigung, des Verpackungsmaterials außerhalb des Siegelns vorteilhaft klein gehalten werden.

Des Weiteren wird vorgeschlagen, dass die Kopplungseinheit zumindest eine zusätzlichen Kolbeneinheit mit einem zusätzlichen Kolben umfasst, welcher parallel zu dem Kolben und/oder dem weiteren Kolben angeordnet ist, wobei die zusätzliche Kolbeneinheit, die Kolbeneinheit und/oder die weitere Kolbeneinheit auf einer, insbesondere der bereits genannten gemeinsamen Montageplatte der Kolbeneinheiten angeordnet sind. Der zusätzliche Kolben ist insbesondere in einer zusätzlichen Kolbenkammer angeordnet. Die zusätzliche Kolbeneinheit ist vorzugsweise zumindest im Wesentlichen baugleich, insbesondere bis auf eine Spiegelsymmetrie, zu der Kolbeneinheit oder der weiteren Kolbeneinheit ausgebildet. Eine Hubrichtung der zusätzlichen Kolbeneinheit ist vorzugsweise zumindest im Wesentlichen parallel zu der Hubrichtung des Kolbeneinheit oder der weiteren Kolbeneinheit, und insbesondere parallel zu der Verschieberichtung und/oder der weiteren Verschieberichtung. Die zusätzliche Kolbeneinheit kann an einem zusätzlichen, insbesondere pneumatischen, hydraulischen oder elektrischen, Antriebselement angeschlossen sein oder an dem Antriebselement oder dem weiteren Antriebselement. Die zusätzliche Kolbeneinheit ist insbesondere zu einer synchronen Bewegung mit der Kolbeneinheit oder der weiteren Kolbeneinheit vorgesehen. Insbesondere ist die zusätzliche Kolbeneinheit dazu vorgesehen, die Siegelkraft auf die Siegelhalter zu übertragen und/oder die Siegelhalter zwischen der Ruheposition und der Siegelposition hin und her zu bewegen. Durch die erfindungsgemäße Ausgestaltung der Siegelvorrichtung kann ein notwendiger Hubraum der Kolbeneinheit oder der weiteren Kolbeneinheit vorteilhaft gering gehalten werden. Ferner kann die Siegelvorrichtung vorteilhaft kompakt gehalten werden, insbesondere unter Beibehaltung einer symmetrischen Kraftverteilung.

Weiterhin wird vorgeschlagen, dass die Siegelvorrichtung eine Lagereinheit zu einer schwimmenden Lagerung der Kopplungseinheit umfasst, welche während eines Betriebs der Kopplungseinheit dazu vorgesehen ist, zumindest im Wesentlichen die gesamte Gewichtskraft der Kopplungseinheit und der Siegelhalter aufzunehmen. Die Lagereinheit umfasst vorzugsweise zumindest ein Lagerelement, in welchem das Kraftübertragungselement oder das weitere Kraftübertragungselement gelagert ist. Das Lagerelement umgreift das Kraftübertragungselement oder das weitere Kraftübertragungselement insbesondere in einer zu der Verschieberichtung oder der weiteren Verschieberichtung senkrechten Ebene. Das Lagerelement lagert das Kraftübertragungselement oder das weitere Kraftübertragungselement insbesondere derart, dass das Kraftübertragungselement oder das weitere Kraftübertragungselement eine geradlinige Bewegung durch die Lagereinheit hindurch ausführen kann, insbesondere ohne das Lagerelement relativ zu dem Maschinengestell dadurch zu bewegen. Das Lagerelement ist insbesondere als Gleitbuchse, als Kugellager, als Rollenlager oder dergleichen ausgebildet. Insbesondere leitet die Lagereinheit die Gewichtskraft der Kopplungseinheit, der Siegelhalter und insbesondere der Siegelbacken in das Maschinengestell. Unter "im Wesentlichen die gesamte Gewichtskraft" soll insbesondere zumindest 50 %, bevorzugt mehr als 75 %, besonders bevorzugt mehr als 90°% der gesamten Gewichtskraft verstanden werden. Alternativ oder zusätzlich umfasst das Maschinengestell eine Führungsschiene oder eine Aufhängung oder dergleichen, welche ein Teil der Gewichtskraft der Kopplungseinheit, der Siegelhalter und insbesondere der Siegelbacken aufnimmt, insbesondere ohne eine Komponente der Kopplungseinheit oder die Siegelhalter starr mit dem Maschinengestell zu verbinden. Durch die erfindungsgemäße Ausgestaltung der Siegelvorrichtung kann die Siegelkraft vorteilhaft symmetrisch auf die Siegelhalter aufgeteilt werden.

Ferner wird vorgeschlagen, dass das weitere Kraftübertragungselement durch eine Materialaussparung des Siegelhalters hindurch ragend angeordnet ist. Insbesondere ist der Siegelhalter in einer zu der Transportrichtung und der weiteren Verschieberichtung parallelen Ebene, welche die Siegelhalter und die Kolbeneinheit schneidet, zwischen dem weiteren Siegelhalter und der Kolbeneinheit angeordnet. Eine Öffnungsweite der Materialaussparung des Siegelhalters in einer zu der weiteren Verschieberichtung senkrechten Ebene ist vorzugsweise groß genug, um einen physischen Kontakt dieser Materialaussparung mit dem weiteren Kraftübertragungselement bei einer Bewegung des weiteren Kraftübertragungselements entlang der weiteren Verschieberichtung zu vermeiden. Vorzugsweise umfasst die Lagereinheit zumindest ein Siegelhalterlagerelement, welches in der Materialaussparung des Siegelhalters angeordnet ist und welches das weitere Kraftübertragungselement aufnimmt. Das Siegelhalterlagerelement umgreift das weitere Kraftübertragungselement insbesondere in einer zu der weiteren Verschieberichtung senkrechten Ebene. Das Siegelhalterlagerelement lagert das weitere Kraftübertragungselement insbesondere derart, dass das weitere Kraftübertragungselement eine geradlinige Bewegung durch den Siegelhalter hindurch ausführen kann und insbesondere derart, dass der Siegelhalter eine geradlinige Bewegung entlang des weiteren Kraftübertragungselements ausführen kann, insbesondere in einer zu dem weiteren Kraftübertragungselement entgegengesetzten Richtung. Das Siegelhalterlagerelement ist insbesondere als Gleitbuchse, als Kugellager, als Rollenlager oder dergleichen ausgebildet. Durch die erfindungsgemäße Ausgestaltung der Siegelvorrichtung kann die Kopplungseinheit vorteilhaft stabil ausgebildet werden. Insbesondere kann eine relative Ausrichtung des Siegelhalters und des weiteren Kraftübertragungselements relativ zu dem Maschinengestell mit vorteilhaft wenigen Bauelementen stabilisiert werden. Insbesondere kann ein Grad einer Verkippung des Siegelhalters oder des weiteren Kraftübertragungselements vorteilhaft gering gehalten werden.

Weiter wird vorgeschlagen, dass die Siegelvorrichtung zumindest eine, insbesondere die bereits genannte, Verpackungstransporteinheit zu einem Fördern eines, insbesondere des bereits genannten, Verpackungsmaterials durch die Längssiegeleinrichtung umfasst, wobei das weitere Kraftübertragungselement durch eine Materialaussparung der Verpackungstransporteinheit hindurch ragend angeordnet ist. Die Verpackungstransporteinheit umfasst insbesondere ein Kontaktförderelement zu einem Reib- und/oder Kraftschluss mit dem Verpackungsmaterial. Das Kontaktförderelement ist insbesondere als geschlossenes Band ausgebildet. Die Verpackungstransporteinheit umfasst insbesondere zumindest ein Führungselement, insbesondere mehrere Führungselemente, an welchem/n das Kontaktförderelement angeordnet ist. Insbesondere umspannt das Kontaktförderelement das zumindest eine Führungselement, insbesondere die Führungselemente, in einer zu der Verschieberichtung senkrechten Ebene. Die Führungselemente können mit dem Maschinengestell starr verbunden sein oder relativ zu dem Maschinengestell drehbar an dem Maschinengestell gelagert sein. Beispielsweise ist das Kontaktförderelement als glattes Band oder als Zahnriemen ausgebildet. Beispielsweise ist das zumindest eine Führungselement als Führungsrolle, insbesondere Umlenkrolle, oder als Stift ausgebildet. Das Kontaktförderelement umspannt in einer zur Verschieberichtung senkrechten Ebene insbesondere eine Innenfläche. Insbesondere ist das zumindest eine Führungselement innerhalb der Innenfläche angeordnet. Optional umfasst die Verpackungstransporteinheit zumindest ein Strukturelement, insbesondere eine Transporteinheitmontageplatte, welches zusammen mit dem zumindest einen Führungselement die Innenfläche zumindest im Wesentlichen, insbesondere zumindest zu 25 %, bevorzugt zu mehr als 50 %, bezogen auf einen Gesamtflächeninhalt der Innenfläche ausfüllt.

Das weitere Kraftübertragungselement ist vorzugsweise durch die Innenfläche hindurchragend angeordnet. Insbesondere umgibt das Kontaktförderelement das weitere Kraftübertragungselement in der zu der weiteren Verschieberichtung senkrechten Ebene vollständig, wobei das Kontaktförderelement beabstandet von dem weiteren Kraftübertragungselement angeordnet ist. Bevorzugt ist die Materialaussparung der Verpackungstransporteinheit, durch welche das weitere Kraftübertragungselement hindurch ragt, innerhalb eines der Förderelemente angeordnet. Eine Öffnungsweite der Materialaussparung der Verpackungstransporteinheit in einer zu der weiteren Verschieberichtung senkrechten Ebene ist vorzugsweise groß genug, um einen physischen Kontakt dieser Materialaussparung mit dem weiteren Kraftübertragungselement bei einer Bewegung des weiteren Kraftübertragungselements entlang der weiteren Verschieberichtung zu vermeiden. Besonders bevorzugt ist das Lagerelement in der Materialaussparung der Verpackungstransporteinheit angeordnet. Insbesondere umfasst die Lagereinheit zumindest ein Transportlagerelement, mittels dessen das zumindest eine Führungselement, insbesondere drehbar, gelagert ist. Das Transportlagerelement ist insbesondere als Drehachse ausgebildet und in der Materialaussparung der Verpackungstransporteinheit angeordnet. Das Transportlagerelement zur Lagerung des zumindest einen Führungselements und das Lagerelement zur Lagerung des weiteren Kraftübertragungselements können einteilig ausgebildet sein, stoffschlüssig miteinander verbunden sein oder separat voneinander ausgebildet sein. Vorzugsweise ist das Lagerelement innerhalb des Transportlagerelements angeordnet. Insbesondere sind das Lagerelement, das Transportlagerelement und das weitere Kraftübertragungselement konzentrisch zueinander angeordnet. Alternativ ist die Materialaussparung der Verpackungstransporteinheit innerhalb des Strukturelements angeordnet. Durch die erfindungsgemäße Ausgestaltung der Siegelvorrichtung können die Verpackungstransporteinheit und die Siegehalter mit den Siegelbacken auf einem vorteilhaft kleinen Bauraum zusammen angeordnet werden.

Des Weiteren wird vorgeschlagen, dass die Siegelvorrichtung zumindest eine, insbesondere unbewegliche, Gegensiegelhaltereinheit umfasst, welche eine Aufpressfläche zu einem Aufpressen einer der Siegelbacken ausbildet, wobei das weitere Kraftübertragungselement durch eine Materialaussparung der Gegensiegelhaltereinheit hindurch ragend angeordnet ist. Die Gegensiegelhalteeinheit umfasst vorzugsweise einen Gegensiegelhalter zu einer Fixierung der Gegensiegelhaltereinheit relativ zu dem Maschinengestell und ein Gegensiegelelement, welches die Aufpressfläche ausbildet. Das Gegensiegelelement ist vorzugsweise an dem Gegensiegelhalter angeordnet, insbesondere starr mit dem Gegensiegelhalter verbunden, oder mit diesem einteilig ausgebildet. Die Aufpressfläche ist entlang der Verschieberichtung dem Siegelhalter gegenüberliegend angeordnet. Insbesondere presst der Siegelhalter die Siegelbacke während des Siegelns gegen die Aufpressfläche, wobei zwischen der Siegelbacke und der Aufpressfläche das Verpackungsmaterial angeordnet ist. Die Gegensiegelhaltereinheit ist zumindest während des Siegelns relativ zu dem Maschinengestell unbeweglich, zumindest bis zu einer vorgesehenen maximal einstellbaren Siegelkraft der Siegelvorrichtung. Die Materialaussparung ist insbesondere in dem Gegensiegelhalter angeordnet. Eine Öffnungsweite der Materialaussparung des Gegensiegelhalters in einer zu der weiteren Verschieberichtung senkrechten Ebene ist vorzugsweise groß genug, um einen physischen Kontakt dieser Materialaussparung mit dem weiteren Kraftübertragungselement bei einer Bewegung des weiteren Kraftübertragungselements entlang der weiteren Verschieberichtung zu vermeiden. Vorzugsweise umfasst die Lagereinheit zumindest ein Gegensiegelhalterlagerelement, welches in der Materialaussparung des Gegensiegelhalters angeordnet ist und welches das weitere Kraftübertragungselement aufnimmt. Das Gegensiegelhalterlagerelement umgreift das weitere Kraftübertragungselement insbesondere in einer zu der weiteren Verschieberichtung senkrechten Ebene. Das Gegensiegelhalterlagerelement lagert das weitere Kraftübertragungselement insbesondere derart, dass das weitere Kraftübertragungselement eine geradlinige Bewegung durch den Gegensiegelhalter hindurch ausführen kann, insbesondere ohne den Gegensiegelhalter dadurch relativ zu dem Maschinengestell zu bewegen. Das Gegensiegelhalterlagerelement ist insbesondere als Gleitbuchse, als Kugellager, als Rollenlager oder dergleichen ausgebildet. Der Gegensiegelhalterlagerelement ist vorzugsweise einteilig mit dem Transportlagerelement ausgebildet. Vorzugsweise ist die Gegensiegelhaltereinheit zerstörungsfrei lösbar an der Lagereinheit fixiert, insbesondere geklemmt. Insbesondere ist die Gegensiegelhaltereinheit in einem Ruhezustand der Längssiegeleinrichtung entlang der Lagereinheit verschiebbar, um einen Formatwechsel des herzustellenden Behälters durchzuführen. Vorzugsweise umfasst die Siegelvorrichtung eine analog ausgebildete weitere Gegensiegelhaltereinheit, welche eine weitere Aufpressfläche ausbildet, welche dem weiteren Siegelhalter entlang der Verschieberichtung gegenüberliegend angeordnet ist. Insbesondere ist die Verpackungstransporteinheit in einer zur Transportrichtung und zur weiteren Verschieberichtung parallelen Ebene zwischen der Gegensiegelhaltereinheit und der weiteren Gegensiegelhaltereinheit angeordnet. Das Gegensiegelelement der Gegensiegelhaltereinheit und ein Gegensiegelelement der weiteren Gegensiegelhaltereinheit können separat voneinander ausgebildet sein oder einteilig ausgebildet sein. Insbesondere können das Gegensiegelelement der Gegensiegelhaltereinheit und das Gegensiegelelement der weiteren Gegensiegelhaltereinheit in einer Richtung senkrecht zur Transportrichtung, insbesondere zu einer Formatanpassung eines herzustellenden Behälters, unabhängig voneinander verschoben werden oder nur gemeinsam verschoben werden. Durch die erfindungsgemäße Ausgestaltung kann eine vorteilhaft kompakte Siegelvorrichtung bereitgestellt werden.

Ferner wird vorgeschlagen, dass die Kopplungseinheit zumindest ein Verstellelement umfasst, mit welchem eine Ausgangsposition des Siegelhalters und/oder des weiteren Siegelhalters relativ zu dem Kraftübertragungselement und/oder dem weiteren Kraftübertragungselement werkzeuglos verstellbar ist. Das Verstellelement ist insbesondere Teil der bereits genannten Verstelleinheit. Die Kopplungseinheit umfasst insbesondere eine Umlenkeinheit, welche die Kolbeneinheit, insbesondere mittelbar über die weitere Kolbeneinheit, mit dem weiteren Kraftübertragungselement mechanisch verbindet. Die Umlenkeinheit ist vorzugsweise starr mit einer der Kolbeneinheiten verbunden. Die Umlenkeinheit ist vorzugsweise zerstörungsfrei lösbar an dem weiteren Kraftübertragungselement angeordnet. Insbesondere umfasst die Umlenkeinheit zwei gegenüberliegende Vorsprünge, welche gemeinsam das weitere Kraftübertragungselement umgreifen. Das Verstellelement ist insbesondere als Gewindefahrwerk ausgebildet, welches zu einem Einklemmen oder Lösen des weiteren Kraftübertragungselements mittels der Vorsprünge vorgesehen ist. Alternativ umfasst das Kraftübertragungselement ein Lochraster, durch welches ein als Stift oder als Schraube ausgebildetes Verstellelement hindurch an der Umlenkeinheit fixiert werden kann. Durch die erfindungsgemäße Ausgestaltung der Siegelvorrichtung kann die Siegelvorrichtung vorteilhaft einfach an unterschiedliche Formate herzustellende Behälter angepasst werden.

Darüber hinaus wird eine Längssiegeleinrichtung mit zumindest einer erfindungsgemäßen Siegelvorrichtung und mit zumindest einer erfindungsgemäßen weiteren Siegelvorrichtung vorgeschlagen. Die weitere Siegelvorrichtung ist vorzugsweise zumindest im Wesentlichen baugleich zu der Siegelvorrichtung ausgebildet. Insbesondere umfasst die weitere Siegelvorrichtung eine Kopplungseinheit, einen Siegelhalter, einen weiteren Siegelhalter und/oder eine Verpackungstransporteinheit in analoger Weise wie für die Siegelvorrichtung beschrieben. Die Längssiegeleinrichtung weist vorzugsweise das Maschinengestell als einziges Maschinengestell auf, an welchem die Siegelvorrichtung und die weitere Siegelvorrichtung, insbesondere schwimmend, gelagert sind. Alternativ umfasst die Siegelvorrichtung und die weitere Siegelvorrichtung je eine eigenes Maschinengestell. Die Komponenten der Siegelvorrichtung und der weiteren Siegelvorrichtung sind vorzugsweise spiegelsymmetrisch angeordnet, insbesondere zu einer zu der Verschieberichtung und der Transportrichtung parallelen Spiegelebene. Die Siegelvorrichtung und die weitere Siegelvorrichtung sind insbesondere beabstandet voneinander angeordnet oder nur über das gemeinsame Maschinengestell und/oder gemeinsame hydraulische, elektrische oder pneumatische Zuleitungen miteinander verbunden. Durch die erfindungsgemäße Ausgestaltung kann eine vorteilhaft kompakte Längssiegeleinrichtung bereitgestellt werden, welche mit vorteilhaft wenig, insbesondere steuerungstechnischen, Aufwand synchrone Längsnähte auf einem Verpackungsmaterial erzeugt.

Die erfindungsgemäße Siegelvorrichtung und/oder die erfindungsgemäße Längssiegeleinrichtung sollen/soll hierbei nicht auf die oben beschriebene Anwendung und Ausführungsform beschränkt sein. Insbesondere kann die erfindungsgemäße Siegelvorrichtung und/oder die erfindungsgemäße Längssiegeleinrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Perspektivdarstellung einer erfindungsgemäßen Längssiegeleinrichtung mit einer erfindungsgemäßen Siegelvorrichtung und einer weiteren erfindungsgemäßen Siegelvorrichtung,
- Fig. 2: eine schematische Darstellung der erfindungsgemäßen Längssiegeleinrichtung bei einem Blick entgegen einer Transportrichtung der erfindungsgemäßen Längssiegeleinrichtung und
- Fig. 3: eine schematische Schnittdarstellung der erfindungsgemäßen Längssiegeleinrichtung in einer zu der Transportrichtung parallelen Schnittebene.

### Beschreibung des Ausführungsbeispiels

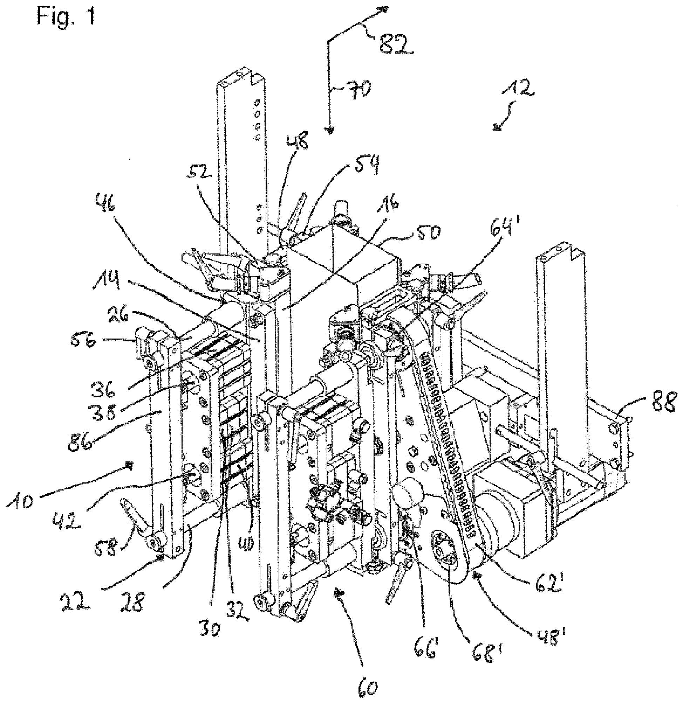

Figur 1 zeigt eine Perspektivdarstellung einer Längssiegeleinrichtung 12 für eine Verpackungsmaschine. Die Längssiegeleinrichtung 12 umfasst zumindest eine Siegelvorrichtung 10. Die Längssiegeleinrichtung 12 umfasst zumindest eine weitere Siegelvorrichtung 60. Die Siegelvorrichtung 10 und die weitere Siegelvorrichtung 60 sind vorzugsweise spiegelsymmetrisch aufgebaut. Die Siegelvorrichtung 10 und die weitere Siegelvorrichtung 60 umfassen insbesondere die gleichen Bauteile. Die Bauteile der weitere Siegelvorrichtung 60 sind der Übersichtlichkeit halber nur vereinzelt mit Bezugszeichen versehen, wobei die Bezugszeichen der weiteren Siegelvorrichtung 60 die gleichen Nummern wie die Bezugszeichen der Siegelvorrichtung 10 tragen, wobei die Bezugszeichen zu einer Unterscheidung mit einem Apostroph gekennzeichnet sind. Die Siegelvorrichtung 10 ist zu einem Versiegeln eines Verpackungsmaterials 50 vorgesehen. Die Siegelvorrichtung 10 umfasst zumindest einer Verpackungstransporteinheit 48. Die Verpackungstransporteinheit 48 ist zu einem Fördern des Verpackungsmaterials 50 entlang einer Transportrichtung 70 zwischen Siegelbacken 16, 20 hindurch vorgesehen, insbesondere zwischen der Siegelvorrichtung 10 und der weiteren Siegelvorrichtung 60 hindurch. Die Transportrichtung 70 ist während eines Betriebs der Längssiegeleinrichtung 12 vorzugsweise an der Vertikalen ausgerichtet und zeigt insbesondere von oben nach unten.

Die Verpackungstransporteinheit 48 ist insbesondere spiegelsymmetrisch zu einer Verpackungstransporteinheit 48' der weiteren Siegelvorrichtung 60 ausgebildet, welche perspektivbedingt in Figur 1 zu sehen ist. Die Verpackungstransporteinheit 48 umfasst zumindest ein Kontaktförderelement 62 zu einem Reib- und/oder Kraftschluss mit dem Verpackungsmaterial 50 (vgl. Kontaktförderelement 62' der weiteren Siegelvorrichtung 60). Die Verpackungstransporteinheit 48 umfasst zumindest ein Führungselement 64 (vgl. Führungselement 64' der weiteren Siegelvorrichtung 60). Die Verpackungstransporteinheit 48 umfasst zumindest ein weiteres Führungselement 66 (vgl. weiteres Führungselement 66' der weiteren Siegelvorrichtung 60). Die Führungselemente 64, 66 sind zu einer Führung des Kontaktförderelements 62 entlang der Transportrichtung 70 vorgesehen. Die Verpackungstransporteinheit 48 umfasst ein Getriebeelement 68 zu einer Kraft- und/oder Drehmomentübertragung auf das Kontaktförderelement 62 (vgl. Getriebeelement 68' der weiteren Siegelvorrichtung 60). Das Getriebeelement 68 ist von dem Führungselement 64 und dem weiteren Führungselement 66 in einer zur Transportrichtung 70 senkrechten Richtung beabstandet angeordnet.

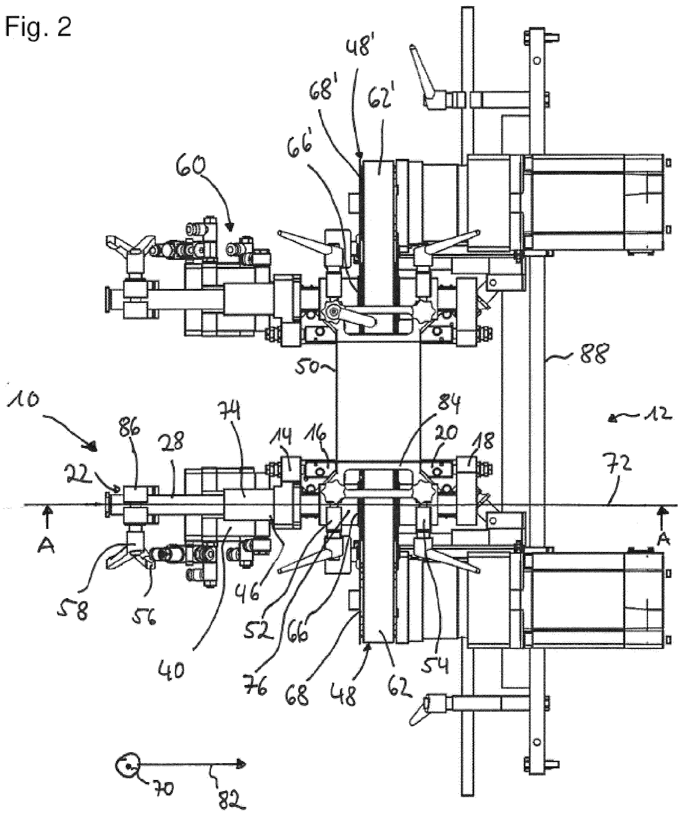

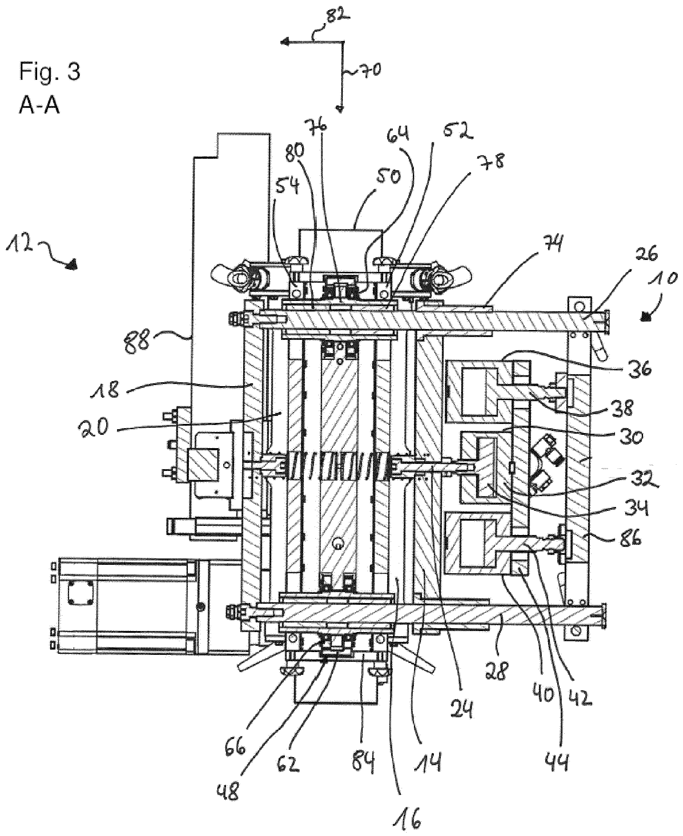

Figur 2 zeigt eine Ansicht der Längssiegeleinrichtung 12 entgegen der Transportrichtung 70, insbesondere eine Unterseite der Längssiegeleinrichtung 12. Die Siegelvorrichtung 10 umfasst die Siegelbacke 16. Die Siegelvorrichtung 10 umfasst die weitere Siegelbacke 20. Die Siegelvorrichtung 10 umfasst zumindest einen Siegelhalter 14 zum Fixieren der Siegelbacke 16. Die Siegelvorrichtung 10 umfasst zumindest einen weiteren Siegelhalter 18 zum Fixieren der weiteren Siegelbacke 20. Der Siegelhalter 14 und der weitere Siegelhalter 18 sind relativ zueinander beweglich gelagert. Die Siegelvorrichtung 10 umfasst eine mechanische Kopplungseinheit 22. Der Siegelhalter 14 und der weitere Siegelhalter 18 sind an der Kopplungseinheit 22 angeordnet. Die Kopplungseinheit 22 umfasst zumindest ein Kraftübertragungselement 24 (vgl. Fig. 3). Die Kopplungseinheit 22 umfasst zumindest ein weiteres Kraftübertragungselement 26, 28, insbesondere zwei weitere Kraftübertragungselemente 26, 28, wobei eines davon im Weiteren als zusätzliches Kraftübertragungselement 28 bezeichnet wird, sofern eine Unterscheidung notwendig ist (vgl. Fig. 1 und 3). Das Kraftübertragungselement 24 ist bei einem Siegeln zu einer Übertragung einer bereitgestellten Siegelkraft auf den Siegelhalter 14 in Form einer Druckkraft vorgesehen. Die weiteren Kraftübertragungselemente 26, 28 sind beim Siegeln zu einem Übertragen der bereitgestellten Siegelkraft auf den weiteren Siegelhalter 18 in Form einer Zugkraft vorgesehen. Die Siegelvorrichtung 10 umfasst zumindest eine, insbesondere unbewegliche, Gegensiegelhaltereinheit 52. Die Siegelvorrichtung 10 umfasst zumindest eine, insbesondere unbewegliche, weitere Gegensiegelhaltereinheit 54. Die Gegensiegelhaltereinheit 52 bildet eine Aufpressfläche zu einem Aufpressen der Siegelbacken 16 aus. Die weitere Gegensiegelhaltereinheit 54 bildet eine Aufpressfläche zu einem Aufpressen der weiteren Siegelbacken 20 aus. Die Gegensiegelhaltereinheiten 52, 54 umfassen insbesondere ein gemeinsames Gegensiegelhalterelement 84, welches die Aufpressflächen beider Gegensiegelhaltereinheiten 52, 54 ausbildet. Die Gegensiegelhaltereinheit 52 umfasst insbesondere einen Gegensiegelhalter und die weitere Gegensiegelhaltereinheit 54 vorzugsweise einen weiteren Gegensiegelhalter, an den das gemeinsame Gegensiegelhalterelement 84 befestigt, insbesondere verschraubt, ist.

Das Kontaktförderelement 62 ist zumindest teilweise zwischen den Siegelhaltern 14, 18 angeordnet. Insbesondere ist das Kontaktförderelement 62 zwischen den Gegensiegelhaltereinheiten 52, 54 angeordnet. Insbesondere sind die Gegensiegelhaltereinheiten 52, 54 zusammen mit dem Kontaktförderelement 62 zwischen den Siegelhaltern 14, 18 angeordnet. Die Siegelbacke 16, die weitere Siegelbacke 20 und das Kontaktförderelement 62 sind bezüglich einer zur Transportrichtung 70 senkrechten Ebene zumindest im Wesentlichen bündig angeordnet. Die Siegelhalter 14, 18 sind insbesondere derart gelagert, dass sie entlang einer Verschieberichtung 82 gegeneinander verschiebbar sind. Vorzugsweise ist der Siegelhalter 14, die Gegensiegelhaltereinheit 52, die Verpackungstransporteinheit 48, die weitere Gegensiegelhaltereinheit 54 und/oder der weitere Siegelhalter 18, insbesondere in dieser Reihenfolge, an den weiteren Kraftübertragungselementen 26, 28 angeordnet. Eine Drehachse des Führungselements 64 oder des weiteren Führungselements 66 verläuft zumindest im Wesentlichen parallel zu der Verschieberichtung 82 des Siegelhalters 14 und/oder des weiteren Siegelhalters 18.

Figur 3 zeigt eine Schnittdarstellung der Längssiegeleinrichtung 12 in einer Siegelebene 72. Die Siegelebene 72 verläuft insbesondere senkrecht zu der Transportrichtung 70. Die Kopplungseinheit 22 umfasst zumindest eine, insbesondere pneumatische, Kolbeneinheit 30 mit zumindest einer Kolbenkammer 32 und mit einem in der Kolbenkammer 32 gelagerten Kolben 34. Der Kolben 34 ist mit dem Kraftübertragungselement 24 wirkverbunden. Die Kolbenkammer 32 ist mit den weiteren Kraftübertragungselementen 26, 28 wirkverbunden. Die Kopplungseinheit 22 umfasst zumindest eine weitere Kolbeneinheit 36 mit einem weiteren Kolben 38. Der weitere Kolben 38 ist entlang einer mechanischen Wirkkette in Reihen mit dem Kolben 34 angeordnet. Die Kopplungseinheit 22 umfasst zumindest eine zusätzliche Kolbeneinheit 40 mit einem zusätzlichen Kolben 42. Der zusätzliche Kolben 42 ist parallel zu dem weiteren Kolben 38 angeordnet. Die zusätzliche Kolbeneinheit 40, die Kolbeneinheit 30 und/oder die weitere Kolbeneinheit 36 sind auf einer gemeinsamen Montageplatte 44 der Kolbeneinheiten 30, 36, 40 angeordnet. Die Siegelvorrichtung 10 umfasst insbesondere eine Struktureinheit als Umlenkeinheit 86. Die Umlenkeinheit 86 ist insbesondere mit weiteren Kolben 38 und/oder dem zusätzlichen Kolben 38 wirkverbunden. Die Umlenkeinheit 86 ist insbesondere an den weiteren Kraftübertragungselementen 26, 28 fixiert, insbesondere angeklemmt. Die Kopplungseinheit 22 umfasst zumindest ein Verstellelement 56, 58, mit welchem eine Ausgangsposition des Siegelhalters 14 und/oder des weiteren Siegelhalters 18 relativ zu dem Kraftübertragungselement 24 und/oder den weiteren Kraftübertragungselementen 26, 28 und/oder relativ zu dem Kontaktförderelement 62 werkzeuglos verstellbar ist.

Die Siegelvorrichtung 10 umfasst eine Lagereinheit 46 zu einer schwimmenden Lagerung der Kopplungseinheit 22. Während eines Betriebs der Kopplungseinheit 22 ist die Lagereinheit 46 dazu vorgesehen, zumindest im Wesentlichen die gesamte Gewichtskraft der Kopplungseinheit 22 und des Siegelhalters 14, 18 aufzunehmen. Das weitere Kraftübertragungselement 26, 28 ist durch eine Materialaussparung des Siegelhalters 14 hindurch ragend angeordnet. Insbesondere umfasst die Lagereinheit 46 ein Siegelhalterlagerelement 74. Das Siegelhalterlagerelement 74 ist beispielsweise als Gleitlager ausgebildet. Das Siegelhalterlagerelement 74 ist insbesondere in der Materialaussparung des Siegelhalters 14 angeordnet. Das weitere Kraftübertragungselement 26 ist insbesondere in dem Siegelhalterlagerelement 74 gelagert. Das weitere Kraftübertragungselement 26, 28 ist durch eine Materialaussparung der Verpackungstransporteinheit 48 hindurch ragend angeordnet. Insbesondere umfasst die Lagereinheit 46 ein Transportlagerelement 76. Das Transportlagerelement 76 ist beispielsweise als Gleitlager ausgebildet. Das Transportlagerelement 76 ist insbesondere in der Materialaussparung der Verpackungstransporteinheit 48 angeordnet. Das weitere Kraftübertragungselement 26 ist insbesondere in dem Transportlagerelement 76 angeordnet. Das weitere Kraftübertragungselement 26, 28 ist durch eine Materialaussparung der Gegensiegelhaltereinheit 52, 54 hindurch ragend angeordnet. Insbesondere umfasst die Lagereinheit 46 ein Gegensiegelhalterlagerelement 78. Das Gegensiegelhalterlagerelement 78 ist beispielsweise als Gleitlager ausgebildet. Das Gegensiegelhalterlagerelement 78 ist insbesondere in der Materialaussparung der Gegensiegelhaltereinheit 52 angeordnet. Das weitere Kraftübertragungselement 26 ist insbesondere in dem Gegensiegelhalterlagerelement 78 gelagert. Insbesondere umfasst die Lagereinheit 46 ein weiteres Gegensiegelhalterlagerelement 80. Das weitere Gegensiegelhalterlagerelement 80 ist beispielsweise als Gleitlager ausgebildet. Das Gegensiegelhalterlagerelement 80 ist insbesondere in der Materialaussparung der weiteren Gegensiegelhaltereinheit 54 angeordnet. Das weitere Kraftübertragungselement 26 ist insbesondere in dem weiteren Gegensiegelhalterlagerelement 80 gelagert. Das Gegensiegelhalterlagerelement 78 und/oder das weitere Gegensiegelhalterlagerelement 80 sind insbesondere innerhalb des Transportlagerelements 76 angeordnet. Die Gegensiegelhaltereinheit 52 und/oder die weitere Gegensiegelhaltereinheit 54 der Siegelvorrichtung 10 ist an der Lagereinheit 46, insbesondere an dem Transportlagerelement 76 angeordnet, insbesondere fixiert. Das Führungselement 64 und/oder das weitere Führungselement 66 der Verpackungstransporteinheit 48 zu einer Führung des Kontaktförderelement 62 sind an der Lagereinheit 46 angeordnet. Das Führungselement 64 ist insbesondere an dem Transportlagerelement 76 gelagert.

Die Siegelbacke 16 ist insbesondere an dem Siegelhalter 14 befestigt. Der Siegehalter 14 ist vorzugsweise an dem Kraftübertragungselement 24 befestigt. Der Siegelhalter 14 ist insbesondere an den weiteren Kraftübertragungselementen 26, 28 beweglich gelagert, insbesondere zu einer Ausführung einer geradlinigen Bewegung. Das Kraftübertragungselement 24 ist insbesondere an dem Kolben 34 befestigt. Der Kolben 34 ist vorzugsweise in der Kolbenkammer 32 gelagert. Die Kolbenkammer 32 ist vorzugsweise an der gemeinsamen Montageplatte 44 befestigt. Eine weitere Kolbenkammer der weiteren Kolbeneinheit 36 und/oder eine zusätzliche Kolbenkammer der zusätzlichen Kolbeneinheit 40 ist insbesondere an der gemeinsamen Montageplatte 44 befestigt. Der weitere Kolben 38 ist insbesondere in der weiteren Kolbenkammer gelagert. Der zusätzliche Kolben 42 ist insbesondere in der zusätzlichen Kolbenkammer gelagert. Der weitere Kolben 38 und/oder der zusätzliche Kolben sind insbesondere an der Umlenkeinheit 86 befestigt. Die weiteren Kraftübertragungselemente 26, 28 sind vorzugsweise an der Umlenkeinheit 86 befestigt. Die weiteren Kraftübertragungselemente 26, 28 sind insbesondere innerhalb des Transportlagerelements 76 gelagert. Insbesondere ist das Transportlagerelement 76 direkt oder mittelbar an einem Maschinengestell 88 der Längsnahteinrichtung 12 angeordnet, insbesondere fixiert. Vorzugsweise ist der weitere Siegelhalter 20 an den weiteren Kraftübertragungselementen 18 befestigt. Die weitere Siegelbacke 20 ist insbesondere an dem weitern Siegelhalter 20 befestigt. Bei einer Druckveränderung in zumindest einer der Kolbeneinheiten 30, 36, 40, bewegen sich die Siegelhalter 16, 20 vermittelt über die Kraftübertragungselemente 24, 26, 28 und insbesondere über die Umlenkeinheit 86 in entgegengesetzte Richtungen senkrecht zu der Transportrichtung 70.

Eine zu der Transportrichtung 70 parallele maximale Längserstreckung des Kontaktförderelements 62 und eine zu der Transportrichtung 70 parallele maximale Längserstreckung des Siegelhalters 14 und/oder des weiteren Siegelhalters 18 sind zumindest im Wesentlichen gleich lang ausgebildet. Eine Längsachse einer Montagestange der Siegelvorrichtung 10, an welcher der Siegelhalter 14 und/oder der weitere Siegelhalter 18 angeordnet sind, und eine Drehachse des Führungselements 64 oder des weiteren Führungselements 66 sind zumindest im Wesentlichen koaxial angeordnet. Die Montagestange wird insbesondere durch das weitere Kraftübertragungselement 26 ausgebildet.

## Patentansprüche

1. Siegelvorrichtung für eine Längssiegeleinrichtung einer Verpackungsmaschine, mit zumindest einem Siegelhalter (14) zum Fixieren einer Siegelbacke (16) der Längssiegeleinrichtung, mit zumindest einem weiteren Siegelhalter (18) zum Fixieren einer weiteren Siegelbacke (20) der Längssiegeleinrichtung, wobei der Siegelhalter (14) und der weitere Siegelhalter (18) relativ zueinander beweglich gelagert sind, und mit einer mechanischen Kopplungseinheit (22), an welcher der Siegelhalter (14) und der weitere Siegelhalter (18) angeordnet sind, wobei die Kopplungseinheit (22) zumindest ein Kraftübertragungselement (24) und ein weiteres Kraftübertragungselement (26, 28) umfasst, wobei das Kraftübertragungselement (24) bei einem Siegeln zu einer Übertragung einer bereitgestellten Siegelkraft auf den Siegelhalter (14) in Form einer Druckkraft vorgesehen ist und wobei das weitere Kraftübertragungselement (26, 28) bei einem Siegeln zu einem Übertragen der bereitgestellten Siegelkraft auf den weiteren Siegelhalter (18) in Form einer Zugkraft vorgesehen ist, **dadurch gekennzeichnet, dass** die Kopplungseinheit (22) zumindest eine, insbesondere pneumatische, Kolbeneinheit (30) mit zumindest einer Kolbenkammer (32) und mit einem in der Kolbenkammer (32) gelagerten Kolben (34) umfasst, wobei der Kolben (34) mit einem der Kraftübertragungselemente (24) wirkverbunden ist und die Kolbenkammer (32) mit einem anderen der Kraftübertragungselemente (26, 28) als der Kolben (34) wirkverbunden ist.

2. Siegelvorrichtung nach Anspruch 1, **dadurch gekennzeichnet, dass** die Kopplungseinheit (22) zumindest eine weitere Kolbeneinheit (36) mit einem weiteren Kolben (38) umfasst, wobei der weitere Kolben (38) entlang einer mechanischen Wirkkette in Reihen mit dem Kolben (34) angeordnet ist.

3. Siegelvorrichtung nach Anspruch 1 oder 2, **dadurch gekennzeichnet, dass** die Kopplungseinheit (22) zumindest eine zusätzliche Kolbeneinheit (40) mit einem zusätzlichen Kolben (42) umfasst, welcher parallel zu dem Kolben (34) und/oder dem weiteren Kolben (38) angeordnet ist, wobei die zusätzliche Kolbeneinheit (40), die Kolbeneinheit (30) und/oder die weitere Kolbeneinheit (36) auf einer gemeinsamen Montageplatte (44) der Kolbeneinheiten (30, 36, 40) angeordnet sind.

4. Siegelvorrichtung nach einem der vorhergehenden Ansprüche, **gekennzeichnet durch** eine Lagereinheit (46) zu einer schwimmenden Lagerung der Kopplungseinheit (22), welche während eines Betriebs der Kopplungseinheit (22) dazu vorgesehen ist, zumindest im Wesentlichen die gesamte Gewichtskraft der Kopplungseinheit (22) und der Siegelhalter (14, 18) aufzunehmen.

5. Siegelvorrichtung nach einem der vorhergehenden Ansprüche, **dadurch gekennzeichnet, dass** das weitere Kraftübertragungselement (26, 28) durch eine Materialaussparung des Siegelhalters (14) hindurch ragend angeordnet ist.

6. Siegelvorrichtung nach einem der vorhergehenden Ansprüche, **gekennzeichnet durch** eine Verpackungstransporteinheit (48) zu einem Fördern eines Verpackungsmaterials (50) durch die Längssiegeleinrichtung, wobei das weitere Kraftübertragungselement (26, 28) durch eine Materialaussparung der Verpackungstransporteinheit (48) hindurch ragend angeordnet ist.

7. Siegelvorrichtung nach einem der vorhergehenden Ansprüche, **gekennzeichnet durch** zumindest eine, insbesondere unbewegliche, Gegensiegelhaltereinheit (52, 54), welche eine Aufpressfläche zu einem Aufpressen eine der Siegelbacken (16, 20) ausbildet, wobei das weitere Kraftübertragungselement (26, 28) durch eine Materialaussparung der Gegensiegelhaltereinheit (52, 54) hindurch ragend angeordnet ist.

8. Siegelvorrichtung nach einem der vorhergehenden Ansprüche, **dadurch gekennzeichnet, dass** die Kopplungseinheit (22) zumindest ein Verstellelement (56, 58) umfasst, mit welchem eine Ausgangsposition des Siegelhalters (14) und/oder des weiteren Siegelhalters (18) relativ zu dem Kraftübertragungselement (24) und/oder dem weiteren Kraftübertragungselement (26, 28) werkzeuglos verstellbar ist.

9. Längssiegeleinrichtung mit zumindest einer Siegelvorrichtung nach einem der vorhergehenden Ansprüche und mit zumindest einer weiteren Siegelvorrichtung nach einem der vorhergehenden Ansprüche.

## Claims

1. Sealing device for a longitudinal sealing apparatus of a packaging machine, having at least one sealing holder (14) for fixing a sealing jaw (16) of the longitudinal sealing apparatus, having at least one further sealing holder (18) for fixing a further sealing jaw (20) of the longitudinal sealing apparatus, the sealing holder (14) and the further sealing holder (18) being supported movably relative to each other, and having a mechanical coupling unit (22) on which the sealing holder (14) and the further sealing holder (18) are arranged, the coupling unit (22) comprising at least one force transmission element (24) and a further force transmission element (26, 28), the force transmission element (24) being configured, during a sealing, to transmit a provided sealing force to the sealing holder (14) in the form of a compressive force, and the further force transmission element (26, 28) being configured, during a sealing, to transmit the provided sealing force to the further sealing holder (18) in the form of a tensile force, **characterized in that** the coupling unit (22) comprises at least one in particular pneumatic piston unit (30) having at least one piston chamber (32) and having a piston (34) supported in the piston chamber (32), the piston (34) being operatively connected to one of the force transmission elements (24) and the piston chamber (32) being operatively connected to a different force transmission element (26, 28) than the piston (34).

2. Sealing device according to claim 1, **characterized in that** the coupling unit (22) comprises at least one further piston unit (36) having a further piston (38), the further piston (38) being arranged in series with the piston (34) along a mechanical chain of effect.

3. Sealing device according to claim 1 or 2, **characterized in that** the coupling unit (22) comprises at least one additional piston unit (40) having an additional piston (42) which is arranged in parallel with the piston (34) and/or the further piston (38), the additional piston unit (40), the piston unit (30) and/or the further piston unit (36) being arranged on a common assembly plate (44) of the piston units (30, 36, 40).

4. Sealing device according to any of the preceding claims,
**characterized by** a bearing unit (46) for floatingly supporting the coupling unit (22), which bearing unit is configured to at least substantially absorb the entire weight force of the coupling unit (22) and of the sealing holders (14, 18) during operation of the coupling unit (22).

5. Sealing device according to any of the preceding claims,
**characterized in that** the further force transmission element (26, 28) is arranged such that it projects through a material recess of the sealing holder (14).

6. Sealing device according to any of the preceding claims,
**characterized by** a packaging transport unit (48) for conveying a packaging material (50) through the longitudinal sealing apparatus, the further force transmission element (26, 28) being arranged such that it projects through a material recess of the packaging transport unit (48).

7. Sealing device according to any of the preceding claims,
**characterized by** at least one in particular immobile counter sealing holder unit (52, 54) which forms a press-on surface for a pressing-on of one of the sealing jaws (16, 20), the further force transmission element (26, 28) being arranged such that it projects through a material recess of the counter sealing holder unit (52, 54).

8. Sealing device according to any of the preceding claims,
**characterized in that** the coupling unit (22) comprises at least one adjusting element (56, 58) by means of which an initial position of the sealing holder (14) and/or of the further sealing holder (18) relative to the force transmission element (24) and/or the further force transmission element (26, 28) is adjustable without a tool.

9. Longitudinal sealing apparatus having at least one sealing device according to any of the preceding claims and having at least one further sealing device according to any of the preceding claims.

## Revendications

1. Dispositif de scellement pour un dispositif de scellement longitudinal d'une machine d'emballage, comportant au moins un support de scellement (14) destiné à fixer une mâchoire de scellement (16) du dispositif de scellement longitudinal, comportant au moins un autre support de scellement (18) destiné à fixer une autre mâchoire de scellement (20) du dispositif de scellement longitudinal, dans lequel le support de scellement (14) et l'autre support de scellement (18) sont montés de manière à pouvoir se déplacer l'un par rapport à l'autre, et comportant une unité d'accouplement (22) mécanique sur laquelle sont disposés le support de scellement (14) et l'autre support de scellement (18), dans lequel l'unité d'accouplement (22) comprend au moins un élément de transmission de force (24) et un autre élément de transmission de force (26, 28), dans lequel l'élément de transmission de force (24) est prévu, lors d'un scellement, pour une transmission d'une force de scellement mise à disposition sur le support de scellement (14) sous forme d'une force de pression et l'autre élément de transmission de force (26, 28) est prévu, lors d'un scellement, pour une transmission de la force de scellement mise à disposition sur l'autre support de scellement (18) sous forme d'une force de traction, **caractérisé en ce que** l'unité d'accouplement (22) comprend au moins une unité de piston (30), en particulier pneumatique, comportant au moins une chambre de piston (32) et comportant un piston (34) monté dans la chambre de piston (32), dans lequel le piston (34) est en liaison fonctionnelle avec l'un des éléments de transmission de force (24) et la chambre de piston (32) est en liaison fonctionnelle avec un autre des éléments de transmission de force (26, 28) que le piston (34).

2. Dispositif de scellement selon la revendication 1, **caractérisé en ce que** l'unité d'accouplement (22) comprend au moins une autre unité de piston (36) comportant un autre piston (38), dans lequel l'autre piston (38) est disposé le long d'une chaîne d'action mécanique en série avec le piston (34).

3. Dispositif de scellement selon la revendication 1 ou 2,
**caractérisé en ce que** l'unité d'accouplement (22) comprend au moins une unité de piston supplémentaire (40) comportant un piston supplémentaire (42) qui est disposé parallèlement au piston (34) et/ou à l'autre piston (38), dans lequel l'unité de piston supplémentaire (40), l'unité de piston (30) et/ou l'autre unité de piston (36) sont disposées sur une plaque de montage commune (44) des unités de piston (30, 36, 40).

4. Dispositif de scellement selon l'une des revendications précédentes,
**caractérisé par** une unité de palier (46) destinée à un montage flottant de l'unité d'accouplement (22), qui est prévue, pendant un fonctionnement de l'unité d'accouplement (22), pour recevoir au moins sensiblement la totalité du poids de l'unité d'accouplement (22) et des supports de scellement (14, 18).

5. Dispositif de scellement selon l'une des revendications précédentes,
**caractérisé en ce que** l'autre élément de transmission de force (26, 28) est disposé de manière à faire saillie à travers un évidement de matériau du support de scellement (14).

6. Dispositif de scellement selon l'une des revendications précédentes,
**caractérisé par** une unité de transport d'emballage (48) destinée à transporter un matériau d'emballage (50) à travers le dispositif de scellement longitudinal, dans lequel l'autre élément de transmission de force (26, 28) est disposé de manière à faire saillie à travers un évidement de matériau de l'unité de transport d'emballage (48).

7. Dispositif de scellement selon l'une des revendications précédentes,
**caractérisé par** au moins une contre-unité de support de scellement (52, 54), en particulier immobile, qui forme une surface de pressage pour un pressage de l'une des mâchoires de scellement (16, 20), dans lequel l'autre élément de transmission de force (26, 28) est disposé de manière à faire saillie à travers un évidement de matériau de la contre-unité de support de scellement (52, 54).

8. Dispositif de scellement selon l'une des revendications précédentes, **caractérisé en ce que** l'unité d'accouplement (22) comprend au moins un élément de réglage (56, 58) permettant de régler sans outil une position initiale du support de scellement (14) et/ou de l'autre support de scellement (18) par rapport à l'élément de transmission de force (24) et/ou à l'autre élément de transmission de force (26, 28).

9. Dispositif de scellement longitudinal comportant au moins un dispositif de scellement selon l'une des revendications précédentes et comportant au moins un autre dispositif de scellement selon l'une des revendications précédentes.
